# EUROPÄISCHE PATENTSCHRIFT

(11) **EP 0 516 956 B1**
(45) Veröffentlichungstag und Bekanntmachung des Hinweises auf die Patenterteilung: **30.10.1996**
(21) Anmeldenummer: 92106744.3
(22) Anmeldetag: 21.04.1992
(51) Int. Cl.: B07C 5/34

(54) **Verfahren und Vorrichtung zum Kennzeichnen von wiederbefüllbaren Behältern, insbesondere Kunststoff-Flaschen sowie Code-Symbol zur Kennzeichnung von Kunststoff-Flaschen**
Process and device for characterizing refillable containers, particularly synthetic material bottles
Procédé et dispositif de caractérisation de conteneurs rechargeables, en particulier de bouteilles en matière synthétique

(30) Priorität: 07.06.1991 CH 1696/91; 08.11.1991 CH 3268/91
(43) Veröffentlichungstag der Anmeldung: 09.12.1992
(73) Patentinhaber: ELPATRONIC AG, CH-6303 Zug (CH)
(72) Erfinder: Apter, Robert, CH-8049 Zürich (CH); Weinstock, Julian, CH-8964 Rudolfstetten (CH)

(56) Entgegenhaltungen:
- EP-A- 0 354 362
- DE-A- 3 032 520
- DE-A- 3 623 475
- DE-C- 3 626 775
- FR-A- 2 440 583
- US-A- 3 898 433
- US-A- 4 919 799

## Beschreibung

Die Erfindung betrifft ein Verfahren gemäss Oberbegriff des Anspruchs 1.

Ferner betrifft die Erfindung eine Vorrichtung gemäss Oberbegriff des Anspruchs 12.

Ein solches Verfahren bzw. eine solche Vorrichtung ist grundsätzlich aus der DE-PS 36 26 775 bekannt. Dort werden Mehrwegbehälter bei jedem Rücklauf mit einer ergänzenden Codierung versehen. Für das Problem, die Codierung möglichst fehlerfrei erfassbar und zudem platzsparend anzuordnen, wird dabei keine Lösung gezeigt. Letzteres ist insbesondere wichtig, da die Menge der Informationen, welche während der Lebensdauer des Behälters auf dem Behälter als Information über den Behälter selber und das Füllgut aufgebraucht werden soll, im Zunehmen begriffen ist, und da andererseits immer kleinere Behälter (z.B. 0,3 Liter PET-Flaschen) derart kennzeichenbar sein sollen.

Aus der EP-A 354 362 ist es bekannt, PET-Flaschen mittels eines Lasers mit Code-Symbolen zu versehen und aus der DE-OS 29 43 811 ist ein spezielles Code-Leseverfahren bekannt.

Die DE-OS 30 32 520 beschreibt eine Anordnung zur Kontrolle der Einsatzdauer von zylindrischen Behältern, insbesondere Kegs. Kegs für die Getränke-Industrie bedürfen der Nacheichung in vorgegebenen Zeitabständen, z.B. nach jeweils acht Jahren. Die bekannte Anordnung ermöglicht, den in Betriebsetzungs-Zeitpunkt von zylindrischen Behältern hinsichtlich der Notwendigkeit einer Nacheichung des Behälters zu überwachen. Zu diesem Zweck trägt jeder Behälter auf einem ersten gedachten Kreis eine Positionsmarkierung, der ein erster Abtastkopf zugeordnet ist. Auf einem zweiten gedachten Kreis trägt der Behälter Code-Symbole in Form von Strichen, die den Inbetriebnahme-Zeitpunkt angeben und denen ein zweiter Abtastkopf zugeordnet ist. Der Behälter wird um seine Symmetrieachse in Drehung versetzt, und der erste Abtastkopf schaltet beim Erfassen der Positionsmarkierung den zweiten Abtastkopf ein, der seinerseits einen Markierungsleser einschaltet. Die Code-Symbole für den Inbetriebnahme-Zeitpunkt bestehen aus einer Anzahl von Strichen, weshalb der sie erfassende Abtastkopf mit einem Zähler arbeitet und die erfasste Anzahl von Strichen ein Mass für den Inbetriebnahme-Zeitpunkt des Behälters darstellt. Jede Nacheichung wird durch Aufbringen eines neuen Code-Symbols festgehalten. Der Vergleich des Zählergebnisses mit einem Kontrollwert ergibt dann ein Mass dafür, ob der kontrollierte Behälter bereits für eine Zeitdauer in Betrieb war, die eine Nacheichung erforderlich macht. Wenn die Notwendigkeit einer Nacheichung festgestellt wird, wird der betreffende Behälter ausgeschieden und einer Eichung in einer anderen Vorrichtung zugeführt, wobei dann auch das neue Code-Symbol aufgebracht wird. Dieses Aufbringen des neuen Code-Symbols erfolgt auf eine Weise und an einem Ort, die in der DE-OS 30 32 520 nicht beschrieben sind. Darüber hinaus erfolgt das Aufbringen eines neuen Code-Symbols in beliebigem Abstand in bezug auf die vorhergehenden Code-Symbole, was bei der bekannten Anordnung ausreichend ist, da die Code-Symbole lediglich gezählt werden. Einen über die Anzahl der erfolgten Nacheichungen, oder der seit der Inbetriebnahme des Behälters verstrichenen Jahre hinausgehenden Informationsgehalt, hat der aus den Code-Symbolen bestehende Code bei dem bekannten Kennzeichnungsverfahren offenbar nicht.

Aus der DE-OS 36 23 475 ist ein Verfahren zur Erkennung von im wesentlichen rotationssymmetrischen Gegenständen, insbesondere Behältern, welche mit Codezeichen versehen sind, bekannt, das dazu dient, z.B. in der Getränkeindustrie mit einer individualisierenden Kennzeichnung, aus welcher u.a. der Eigentümer und der Zeitpunkt der Inbetriebnahme zu ersehen ist, versehene Transportbehälter zu erkennen, um den Weg von Leergut verfolgen zu können. Dieses bekannte Verfahren betrifft aber weniger den Code-Aufbau, sondern mehr die Beseitigung des Problems, die Codierung auch dann sicher lesen zu können, wenn sie in bezug auf einen optischen Sensor keine genau vorgegebene Lage hat. Zur Beseitigung dieses Problems werden bei dem bekannten Verfahren die Code-Zeichen als radial verlaufende Balken mit sich von der Umgebung unterscheidendem Remissionsgrad kreisringförmig um einen Mittelpunkt angeordnet und abgetastet, aus den durch die Abtastung gewonnenen Signalen wird ein Mittelwert gebildet, die Signale werden unter Verwendung eines Schwellwertes binarisiert, welcher aus dem Mittelwert abgeleitet wird, und die binären Signale werden decodiert. Der Kreisring der Code-Zeichen wird dabei in gleiche, jeweils für ein Code-Zeichen vorgesehene Sektoren eingeteilt, und eine bestimmte Anzahl von Sektoren ist jeweils für die Darstellung jeweils einer Stelle eines Datenwortes vorgesehen. Bei diesem bekannten Verfahren ist es weder beabsichtigt noch möglich, Behälter mit neuen Code-Symbolen zu kennzeichnen, anhand welcher sich später feststellen liesse, ob ein Behälter erneut gefüllt werden darf oder auszuscheiden ist.

In der Getränke-Industrie werden statt Glasflaschen mehr und mehr wiederbefüllbare Kunststoff-Flaschen, insbesonder PET-Flaschen eingeführt, bei denen die Anzahl der Wiederbefüllungen begrenzt ist. Solche wiederbefüllbaren Kunststoff-Flaschen müssen daher ausgeschieden werden, wenn die Anzahl ihrer Umläufe den Grenzwert erreicht hat. Das erfordert andererseits, dass vor jedem Umlauf, also bei jeder Befüllung, die Kunststoff-Flaschen mit wenigstens einem neuen Code-Symbol versehen wird, damit aus der Gesamtzahl der Code-Symbole die Anzahl der Umläufe ermittelt werden kann. Das Verfahren und die Vorrichtung, die aus der oben erwähnten DE-OS 30 32 520 bekannt sind, eignen sich dafür nicht, da die mit einem neuen Code-Symbol zu kennzeichnenden Behälter jeweils lediglich ausgeschieden werden, um woanders mit einem neuen Code-Symbol gekennzeichnet zu werden. Darüber hinaus wäre es bei Kunststoff-Flaschen wünschenswert, den Informationsgehalt über die blosse Anzahl der Code-Symbole hinaus zu vergrössern. Bei Flaschen stösst das auf grössere Schwierigkeiten als bei Kegs, da letztere einen wesentlich grösseren Durchmesser und deshalb mehr Platz für den Code als Flaschen haben.

Ein Code-Symbol ist aus der DE-OS 39 14 440 bekannt. Diese beschreibt einen optisch maschinenlesbaren Binärcode sowie ein Verfahren zu seiner Bildung und zur Bestimmung seiner Grösse und Dichte. Der Code wird von einem Schachbrettmuster-Symbol gebildet, das die Information in Form von schwarzen und weissen Quadraten wiedergibt. Der Binärcode ist in seiner Grösse, seinem Format und in der Dichte seiner Information dynamisch variabel. Die Matrix hat einen Umfang, in welchem die Daten enthalten sind. Der Umfang ist mit einer Dichteanzeige zum Anzeigen der Dichte der Daten in der Matrix versehen. Durch Verwendung der Dichteanzeige und einer Grössenanzeige kann eine Abtasteinrichtung die Grösse und die Informationsdichte des Binärcodes berechnen. Dieser bekannte Binärcode ist bei wiederbefüllbaren Behältern wie z.B. Kunststoff-Flaschen nicht geeignet, weil auf letzteren weder eine Schachbrettmatrix aus schwarzen und weissen Quadraten, noch eine ausreichende Anzahl von solchen Binärcodes, die eine ausreichende Grösse haben, damit sich die Quadrate auch sicher genug erfassen lassen, untergebracht werden könnte.

Aufgabe der Erfindung ist es, ein Verfahren und Vorrichtung der eingangs genannten Art so zu verbessern, dass sich in einem Arbeitsgang die Code-Symbole lesen und die wiederbefüllbaren Behälter mit einem neuen Code-Symbol kennzeichnen lassen, ohne erst ausgeschieden werden zu müssen, wobei ausserdem die Möglichkeit bestehen soll, dass der Informationsgehalt sämtlicher Code-Symbole mehr als nur deren Anzahl beinhaltet. Der Code soll dabei einfach lesbar und aufbringbar und insbesondere auch platzsparend angeordnet sein.

Diese Aufgabe ist ausgehend von einem Verfahren der eingangs genannten Art erfindungsgemäss mit den kennzeichnenden Merkmalen des Patentanpruchs 1 gelöst.

Die Aufgabe ist weiter ausgehend von einer Vorrichtung der eingangs genannten Art erfindungsgemäss mit den kennzeichnenden Merkmalen des Patentanspruchs 12 gelöst.

Das Verfahren nach der Erfindung vereinfacht das Kennzeichnen von wiederbefüllbaren Behältern mit Code-Symbolen, da auf den Behälter keine spezielle Positionsmarkierung aufgebracht wird, sondern dafür jeweils die bereits vorhandenen Code-Symbole verwendet werden. Der Informationsgehalt der Gesamtheit der Code-Symbole ist grösser als bei bekannten Verfahren, da die Code-Symbole nicht in willkürlichen Abständen und in willkürlicher Reihenfolge auf den Behälter aufgebracht werden, sondern jeweils in bestimmter Relation zu den früher aufgebrachten Code-Symbolen. Dies erlaubt weiter eine besonders platzsparende Anordnung des Codes bei guter Lesbarkeit desselben. Das erfindungsgemässe Verfahren erfordert zum Kennzeichnen weniger Zeitaufwand, da zu kennzeichnende Behälter nicht ausgeschieden, sondern nach dem Lesen im gleichen Arbeitsgang auch mit einem neuen Code-Symbol gekennzeichnet werden. Die Code-Symbole bilden einen geordneten, sequentiellen Code, da das Auftragen des Codes und die Interpretation des Codes eine Funktion der relativen Position bezüglich eines Bezugspunktes und, wenn, wie weiter unten noch näher dargelegt, ein geeignetes Code-Symbol verwendet wird, eine Funktion der Relativposition der Code-Elemente oder -wörter sind.

Dieselben Vorteile bietet die Vorrichtung nach der Erfindung im Vergleich mit der bekannten Vorrichtung, da die Erfassungs- und die Leseeinrichtung miteinander kombiniert sind, und sich an diese innerhalb ein und derselben Vorrichtung eine Kennzeichnungseinrichtung zum Kennzeichnen der Behälter mit Code-Symbolen anschliesst.

Vorteilhafte Ausgestaltungen der Erfindung bilden die Gegenstände der Unteransprüche.

Vorteilhafterweise wird das erste Code-Symbol nicht zufällig positioniert, sondern in Abhängigkeit von einer Code-Marke des Hersteller-Codes.

In der Ausgestaltung der Erfindung nach dem Anspruch 4 lässt sich besonders einfach und fehlerfrei die Postiion zum Auftragen eines neuen Code-Symbols im Anschluss an das bei der vorhergehenden Wiederbefüllung aufgetragene Code-Symbol finden, da jeweils der Winkel zwischen dieser Position und der ersten Code-Marke des Hersteller-Codes ermittelt wird, um den der Behälter während der Bewegung aus der Erfassungs- und Leseposition in die Kennzeichnungsposition um seine Symmetrieachse zu drehen ist.

Die Lesesicherheit wird erhöht und das Kennzeichnen wird vereinfacht, wenn in einer Ausgestaltung der Erfindung jedes neue Code-Element in eine Zelle, d.h. in die nächste freie Zelle eingeschrieben wird, wobei das Einschreiben so erfolgt, dass sich die Code-Symbole nicht gegenseitig überlappen.

In der Ausgestaltung der Erfindung nach Anspruch 8 bietet das Verfahren nach der Erfindung den besonderen Vorteil, dass auf dem Behälter nicht nur ein Umlauf-Code gebildet wird, sondern sich anhand des Informationsgehaltes des jeweils als letztes vorhandenen Code-Symbols auch die Geschichte oder Vergangenheit des Behälters verfolgen lässt, und zwar hinsichtlich Füllgut und/oder Abfüller und/oder Befüllungsdatum und/oder anderer Information über das Wiederbefüllen des Behälters. Dabei ist die Information über das Füllgut, das sich in der Vergangenheit und insbesondere zuletzt in dem Behälter befand, bei Kunststoff-Flaschen von grosser Bedeutung. Kunststoff, wie z.B. PET, nimmt nämlich aus dem Füllgut Geruch auf. Dieser lässt sich auch durch das Waschen solcher Flaschen nicht beseitigen, weil Kunststoff-Flaschen bei wesentlich niedrigeren Temperaturen als Glas-Flaschen gewaschen werden müssen, z.B. bei nur 50 bis 60° C. Wenn eine Kunststoff-Flasche als Mehrzweck-Flasche vorgesehen ist, die mit vier verschiedenen Getränken gefüllt werden soll, z.B. mit Mineralwasser, Limonade, Fruchtsaft und einem Cola-Getränk, ist es zweckmässig, bei dem Wiederbefüllen eine erlaubte Füllgutsequenz einzuhalten. Eine erlaubte Füllgutsequenz wäre beispiesweise, eine Kunststoff-Flasche, die vorher mit Mineralwasser gefüllt war, mit einem Cola-Getränk zu füllen. Dagegen wäre eine unerlaubte Füllgutsequenz, eine Kunststoff-Flasche, die vorher mit einem Cola-Getränk gefüllt war, mit Mineralwasser zu füllen. In der Ausgestaltung der Erfindung nach Anspruch 8 lässt sich durch die Auswertung des Informationsgehaltes des als letztes vorhanden Code-Symbols ein Behälter ausscheiden, wenn eine erlaubte Füllgutsequenz durch das Wiederbefüllen nicht eingehalten werden würde.

Die Ausgestaltung der Erfindung nach Anspruch 9 stellt eine besonders einfache Möglichkeit des Kennzeichnens von Kunststoff-Flaschen mit Code-Symbolen dar. Das Verfahren zum Codieren mittels Laserstrahl und dessen Beeinflussung durch eine Maske oder ein Gitter oder dessen Modulation durch ein Strahlablenk-System sind Gegenstand des deutschen Patentes 38 29 025 der Anmelderin, auf das bezüglich weiterer Einzelheiten verwiesen wird.

Die Ausgestaltung der Erfindung nach Anspruch 10 gewährleistet gute Verfahrensergebnisse, da eine zuverlässige Kameratechnik sowie Bildverarbeitungshard- und software verfügbar sind. Als Beispiel sei auf einen älteren Vorschlag der Anmelderin verwiesen, der den Gegenstand des deutschen Patentes 40 27 992 bildet, auf das bezüglich weiterer Einzelheiten ebenfalls verwiesen wird.

Das Verfahren nach Anspruch 11 ist besonders geeignet, die Vergangenheit oder Geschichte eines Behälters verfolgen zu können. Die Grösse der Matrixelemente innerhalb des Code-Symbols kann in Abhängigkeit von und gemäss Code-Informationsgehalt und -konfiguration, Position des Code-Symbols und/oder Leseverfahren und/oder nach anderen Gegebenheiten gewählt werden, stets ist die Grösse der einzelnen Matrixelemente aber ausreichend, um eine sichere Erkennbarkeit bei Anwendung der üblichen Mustererkennungstechnik zu gewährleisten.

In der Ausgestaltung der Erfindung nach Anspruch 13 ist die Vorrichtung besonders leistungsfähig, da die Karussell-Einrichtung einen hohen Durchsatz bei genauer Positionierung der Behälter in der Erfassungs- und Lesestation sowie in der Kennzeichnungsstation und die Verwendung von nur einer Kamera, bzw. nur einer Kennzeichnungseinrichtung, in diesen Stationen ermöglicht. Die Karussell-Einrichtung ermöglicht kurze Bearbeitungszeiten, weil die Behälter während der Zeit, in der sie aus der Erfassungs- und Lesestation in die Kennzeichnungsstation bewegt werden, um ihre eigene Symmetrieachse in die Position gedreht werden, in der sie mit dem neuen Code-Symbol zu kennzeichnen sind. Die Bewegung aus der einen in die andere Station ist keine verlorene Zeit, da nach dem Erfassen der Relativposition des Hersteller-Codes und des Umlauf-Codes der Behälter ohnehin in die für das Kennzeichen mit dem neuen Code-Symbol geeignete Position gedreht werden muss, und dieses Drehen nun während der Bewegung zwischen diesen beiden Stationen erfolgt. Der Kennzeichnungsvorgang selbst läuft ebenfalls sehr schnell ab, weil pro Wiederbefüllen immer nur ein einziges Code-Symbol auf dem Behälter angebracht wird.

In der Ausgestaltung der Erfindung nach Anspruch 14 ermöglicht die Dreheinrichtung ein genaues und vibrationsarmes Positionieren der Behälter in den beiden vorgenannten Stationen.

In der Ausgestaltung der Erfindung nach Anspruch 15 befinden sich die Code-Symbole und der Hersteller-Code in Bereichen des Behälters, die mechanischer Beschädigung bei der Handhabung weniger ausgesetzt sind, wie z.B. der gekrümmte Wandbereich einer Kunststoff-Flasche unmittelbar oberhalb des Bodens. Statt dieses Bereiches könnte zwar auch ein Bereich am Hals einer Kunststoff-Flasche benutzt werden, der verfügbare Platz ist dort jedoch wegen des geringeren Durchmessers beträchtlich kleiner.

Ausführungsbeispiele der Erfindung werden im folgenden unter Bezugnahme auf die Zeichnungen näher beschrieben. Es zeigt
- Fig. 1: eine Vorrichtung nach der Erfindung zum Kennzeichnen von wiederbefüllbaren Kunststoff-Flaschen,
- Fig. 2: die Vorrichtung nach Fig. 1 in einer vereinfachten Draufsicht,
- Fig. 3: die Vorrichtung nach Fig. 1 in Seitenansicht,
- Fig. 4: als Einzelheit einen Kopf einer Dreheinrichtung dar Vorrichtung nach Fig. 1,
- Fig. 5: als Einzelheit einen drehbaren Sitz der Vorrichtung nach Fig. 1 mit auf dem Sitz angeordneter, nur teilweise dargestellter Kunststoffflasche,
- Fig. 6: ein Schema der Vorrichtungslogik der Vorrichtung nach Fig. 1,
- Fig. 7: vierundsechzig Möglichkeiten der Ausgestaltung eines Codesymbols und
- Fig. 8: schematisch die gegenseitige Zuordnung von Herstellercode und Umlaufcode.

Die folgende Beschreibung bezieht sich zwar auf das Kennzeichnen von wiederbefüllbaren zylindrischen Behältern in Form von PET-Flaschen (im folgenden abgekürzt als Flaschen bezeichnet), mit der Vorrichtung lassen sich jedoch auch andere transparente oder nichttransparente zylindrische Behälter kennzeichnen, z.B. Glasflaschen oder Blechdosen.

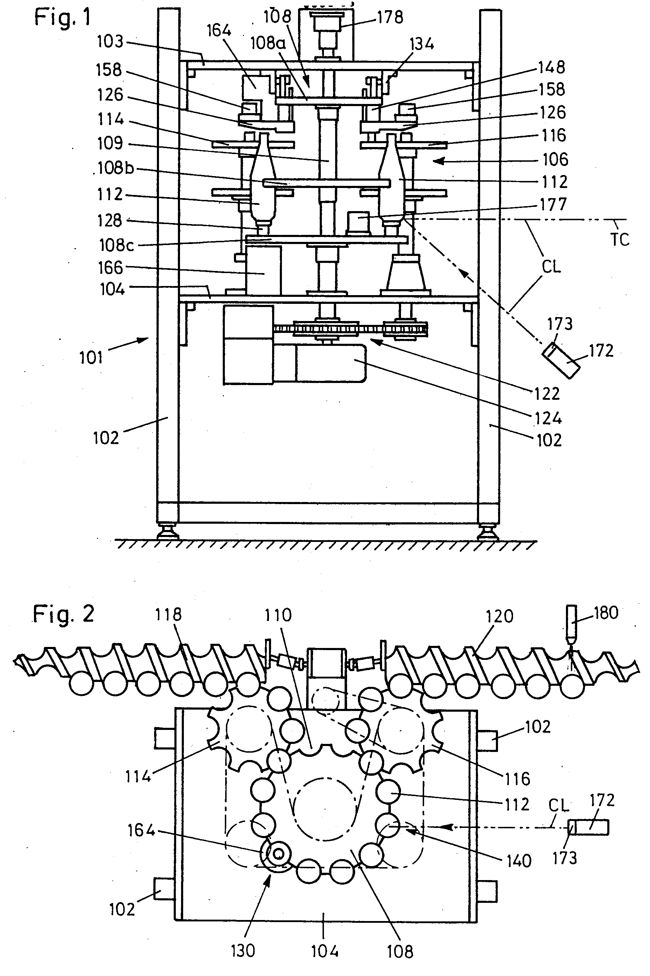

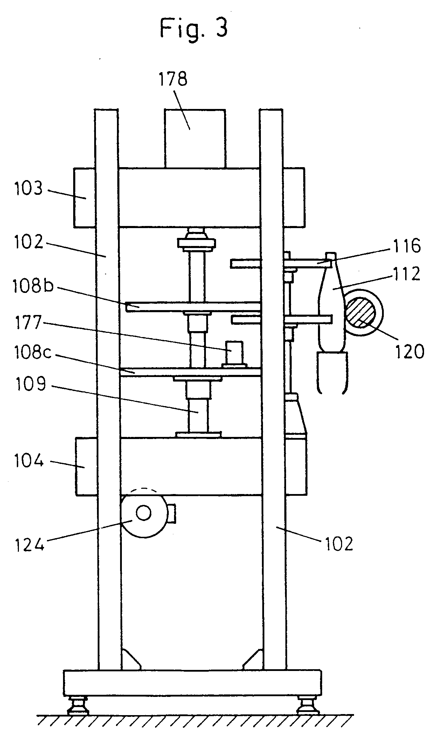

Die Vorrichtung ist in den Fig. 1 bis 3 insgesamt mit 101 bezeichnet. Die Vorrichtung 101 weist ein Gestell 102 mit einer oberen Tragplatte 103 und einer unteren Tragplatte 104 auf, zwischen denen eine insgesamt mit 106 bezeichnete Karusselleinrichtung befestigt ist. Die Karusselleinrichtung 106 weist ein zentrales Karussell 108 mit zwölf Aufnahmeeinrichtungen 110 für Flaschen 112 sowie zwei kleinere Karussells 114, 116 mit jeweils acht Aufnahmeeinrichtungen auf. Die Karusselleinrichtung 106 ist Teil einer Fördereinrichtung, mit der die Flaschen 112 in eine Erfassungsstation 130 und eine Kennzeichnungsstation 140 bewegt werden, was weiter unten noch näher beschrieben ist. Die beiden kleineren Karussells 114, 116 fördern in Verbindung mit zwei Schneckenförderern 118, 120 die Flaschen 112 in die bzw. aus der Vorrichtung 101. Unter der unteren Tragplatte 104 ist ein gemeinsames Antriebssystem 122 befestigt, das einen Getriebemotor 124 umfaßt, der über im einzelnen nicht näher bezeichnete Zahnriemenscheiben und Zahnriemen die Karusselleinrichtung 106 und die Schneckenförderer 118, 120 antreibt.

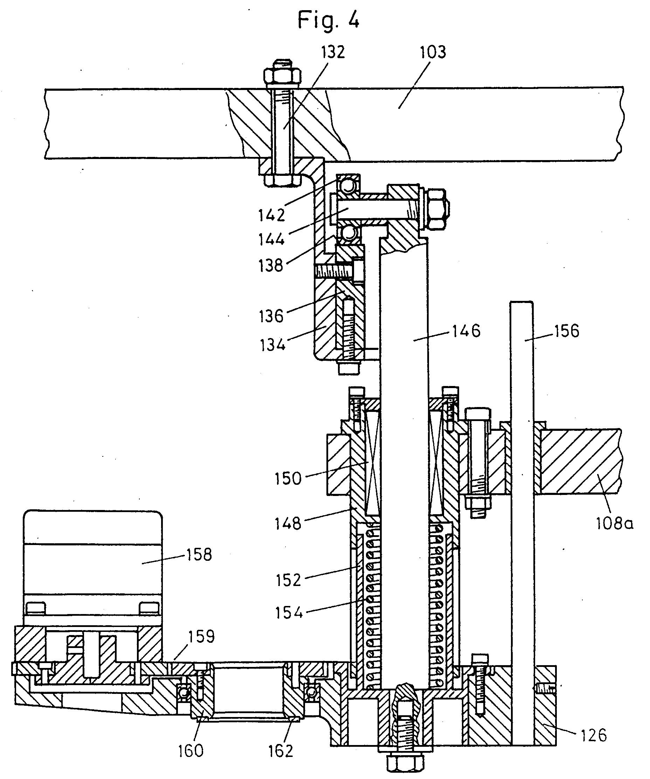

Das zentrale Karussell 108 besteht aus einem oberen Hauptkarussell 108a, einem mittleren Hauptkarussell 108b und einem unteren Hauptkarussell 108c, die auf einer gemeinsamen Welle 109 befestigt sind. Die Aufnahmeeinrichtungen 110 bestehen aus zwölf im Querschnitt halbkreisförmigen Ausnehmungen an dem mittleren Hauptkarussell 108b, zwölf an dem oberen Hauptkarussell 108a vorgesehenen Köpfen 126 (nur zwei sind in Fig. 1 sichtbar) und zwölf an dem unteren Hauptkarussell 108c vorgesehenen drehbaren sitzen 128 zum Aufnehmen, Einspannen bzw. Aufsetzen der Flaschen 112. Einer der Köpfe 126 ist in Fig. 4 als Einzelheit dargestellt, auf die nun gemeinsam mit Fig. 1 Bezug genommen wird.

Jeder Kopf 126 ist an dem oberen Hauptkarussell 108a vertikal beweglich befestigt. An der oberen Tragplatte 103 ist mittels Schrauben 132 ein Tragring 134 befestigt. Der Tragring 134 trägt einen ringförmigen Kurvenkörper 136, auf dessen Kurvenbahn 138 eine Abtastrolle 142 läuft, die hier als Kugellager dargestellt ist. Mittels eines Bolzens 144 ist die Abtastrolle am oberen Ende einer Tragstange 146 befestigt. Am unteren Ende der Tragstange 146 ist der Kopf 126 befestigt. In einem an dem oberen Hauptkarussell 108a befestigten Lagergehäuse 148 ist ein Linearlager 150 angeordnet. Zwischen dem Lagergehäuse 148 und dem Kopf 126 ist in einem Federgehäuse 152 eine Feder 154 angeordnet, die den Kopf 126 in Abwärtsrichtung vorspannt. Der Kopf 126 kann durch die Feder jeweils soweit abwärts bewegt werden, wie es die Höhe einer Flasche 112 oder der Kurvenbahn 138 zuläßt. Ein in dem oberen Hauptkarussell 108a verschiebbar geführter Stift 156 verhindert, daß sich der Kopf 126 in dem Linearlager 150 um die Längsachse der Tragstange 146 drehen kann. Am äußeren Ende des Kopfes 126 ist ein Schrittmotor 158 befestigt, der über eine Zahnraduntersetzung 159 eine Muffe 160 in Drehung versetzt, die mit dem Kopf 126 auf die Flaschenmündung absenkbar ist. Die Muffe 160 erfaßt dabei die Flaschenmündung mit einem Reibring 162. Der Verlauf oder die Form der Kurvenbahn 138 ist so gewählt, daß der Kopf 126 im Bereich des Karussells 114 mit Abstand oberhalb der Flaschenmündung angeordnet ist, dann während der Bewegung der Flasche 112 in die Erfassungsstation 130 auf die Flaschenmündung abgesenkt wird und wenigstens bis zum Erreichen der Kennzeichnungsstation 140 abgesenkt bleibt und schließlich wieder von der Flasche abgehoben und in seine ursprüngliche Höhe zurückbewegt wird, in der er Abstand von der Flaschenmündung hat. Die Steuerung des Schrittmotors 158, mittels welchem die Flasche 112 um ihre Symmetrieachse, d.h. ihre vertikale Längsachse drehbar ist, ist weiter unten beschrieben.

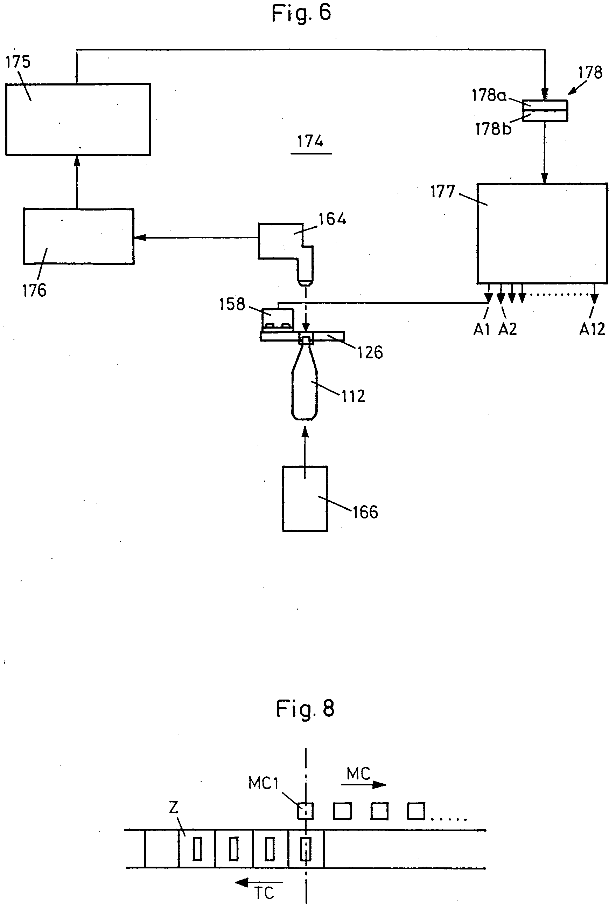

Der Motor 158 jedes Kopfes 126 ist nicht in der Achse der Flasche, d.h. nicht in der Mittelachse der Muffe 160 angeordnet, sondern mit Abstand davon, um die Sichtlinie für eine weiter unten noch ausführlicher beschriebene Erfassungseinrichtung nicht zu versperren. Zu dieser Erfassungseinrichtung gehören eine Kamera 164 und eine Beleuchtungsquelle 166. Gemäß Fig. 1 ist die Kamera 164 an der Unterseite der oberen Tragplatte 103 neben dem oberen Hauptkarussell 108 und über der Bahn der Köpfe 126 befestigt. Die Beleuchtungsquelle 166 ist auf der unteren Tragplatte 104 unterhalb des unteren Hauptkarussells 108c in einer Linie mit der Kamera 164 befestigt. Die Flaschen werden durch das zentrale Karussell 108 auf einer Kreisbahn bewegt und gelangen mit ihrer Symmetrieachse in der Erfassungsstation 130 in eine Position, in der ihre Symmetrieachse mit der Verbindungslinie der Beleuchtungsquelle 166 und der Kamera 164 zusammenfällt. Diese Position ist in Fig. 1 links und außerdem in Fig. 6 dargestellt. Die Beleuchtungsquelle 166 ist ein Stroboskop, das jedesmal dann einen Lichtblitz erzeugt, wenn sich die Flasche 112 genau zwischen Bleuchtungsquelle und Kamera befindet.

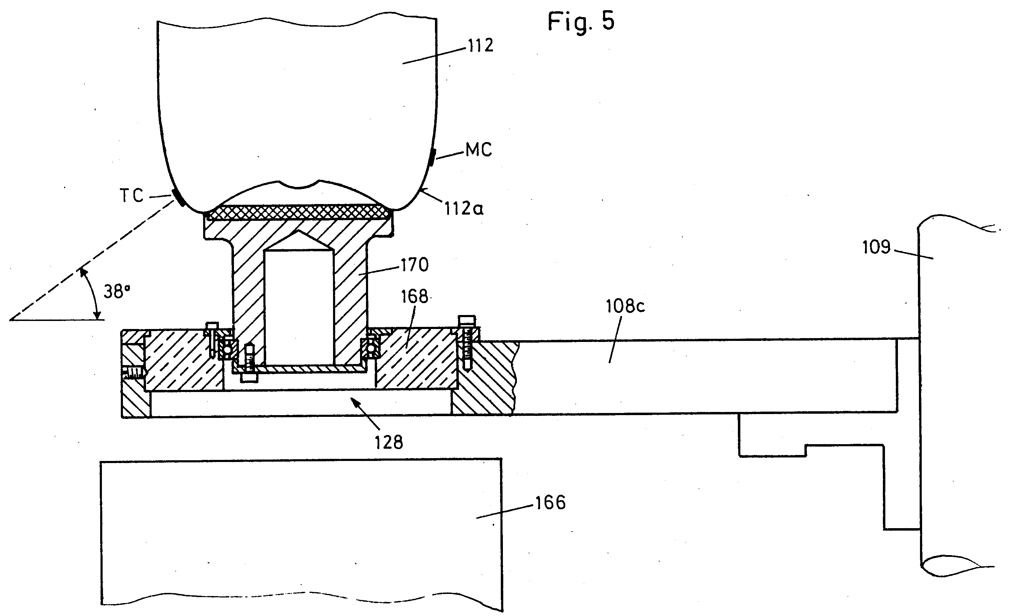

In Fig. 5 sind das untere Hauptkarussell 108c und der drehbare Sitz 128 als unterer Teil einer der zwölf Aufnahmeeinrichtungen 110 des zentralen Karussells 108 gezeigt. Der drehbare Sitz 128 besteht aus einem kreisringförmigen Teil 168 aus transparentem Material (z.B. Acrylglas), das in einer kreisförmigen Öffnung des unteren Hauptkarussells 108c befestigt ist, und aus einem Podest 170 für die Flasche 112, das in dem kreisringförmigen Teil 168 auf in Fig. 5 dargestellte Weise drehbar befestigt ist. Die Beleuchtungsquelle 166 schickt Licht durch das transparente kreisringförmige Teil 168 nach oben und beleuchtet den unteren, gekrümmten Teil 112a der Flasche. In diesem Bereich trägt die Flasche 112 einen von Haus aus vorhandenen Herstellercode MC und einen bereits aufgebrachten oder noch aufzubringenden Umlaufcode TC. Der Herstellercode MC besteht aus mehreren Codemarken, und der Umlaufcode TC besteht aus wenigstens einem Codesymbol, was alles im folgenden noch näher beschrieben ist. Die Kamera 164 nimmt ein Bild des unteren Bereiches 112a der Flasche 112 vom Inneren der Flasche her auf, wenn diese durch die Beleuchtungsquelle 166 beleuchtet ist. Da es sich um eine Momentaufnahme handelt, braucht die Karusselleinrichtung 106 in der Erfassungsstation 130 nicht angehalten zu werden. Auf dem Weg zur Erfassungsstation 130 wird die Flasche durch den vertikal abwärts auf die Flaschenmündung bewegten Kopf 126 eingespannt, der mittels der Muffe 160 auf die Flaschenmündung (bei PET-Flaschen der Ring außen um die Flaschenmündung) und damit die Flasche auf das frei drehbare Podest 170 drückt. Sobald die Kamera 164 ein Bild von dem unteren Bereich 112a gemacht hat, versetzt der Schrittmotor 158 die Flasche 112 in Drehung, um die Flasche bis zum Erreichen der Kennzeichnungsstation 140 um ihre Symmetrieachse in eine Position zu drehen, in der durch eine in der Kennzeichnungsstation vorgesehene Kennzeichnungseinrichtung 172 die Flasche mit einem neuen Codesymbol des Umlaufcodes TC auf im folgenden in einzelnen beschriebene Weise gekennzeichnet werden kann. Die Kennzeichnungseinrichtung 172 ist in dem dargestellten Ausführungsbeispiel ein Laser, der den Laserstrahl schräg von unten unter einem Winkel von ca. 38° gegen die Horizontale (Mittellinie CL des Umlaufcodes TC) auf die äußere Oberfläche der Flasche 112 schickt. Der Laserstrahl kann durch eine Einrichtung 173 hindurchgeschickt werden, um dem Codesymbol eine bestimmte Konfiguration zu geben. Die Einrichtung 173 kann eine Maske, ein Gitter od.dgl. oder ein den Laserstrahl modulierendes Strahlablenksystem sein.

Fig. 6 zeigt ein Schema einer insgesamt mit 174 bezeichneten Vorrichtungslogik. Zu dieser gehören ein Hauptcontroller 175, ein Bildprozessor 176 und ein Karussellmikrocontroller 177 als Steuereinrichtung für die zwölf Schrittmotoren 158. In Fig. 6 ist lediglich ein Schrittmotor 158 gezeigt. Der Karussellmikrocontroller 177 hat zwölf Ausgänge A1-A12 für die Schrittmotoren 158. Der Hauptcontroller 175 ist neben oder entfernt von der Vorrichtung 101 aufgestellt, wogegen der Karussellmikrocontroller 177 auf dem unteren Hauptkarussell 108a befestigt ist, wie in Fig. 1 angedeutet. Seine Ausgänge A1-A12 sind mit den Schrittmotoren 158 über nicht dargestellte Leitungen verbunden. Die Verbindung zwischen dem feststehenden Bildprozessor 176 und dem mit dem zentralen Karussell 108 umlaufenden Karussellmikrocontroller 177 erfolgt über einen Schleifring 178. Dieser hat, wie in Fig. 6 schematisch angedeutet, einen feststehenden Schleifring 178a und einen auf der Welle 109 des zentralen Karussells 108 befestigten und somit umlaufenden Schleifring 178b. Bei der Relativdrehung der Schleifringe werden Daten seriell übertragen.

Der Hauptcontroller 175 verfolgt die Flaschen 112 auf ihrem Weg durch die Vorrichtung und empfängt dabei Eingangssignale aus verschiedenen Sensoren und einem Drehgeber (jeweils nicht dargestellt) und steuert so die gesamte Vorrichtung einschließlich der Betätigung der Beleuchtungsquelle 166 und der Kamera 164, die ebenfalls Teil der Bildverarbeitungshardware sind. Der Bildprozessor 176 bestimmt die Position des Ursprungs, d.h. der ersten Codemarke des Herstellercodes MC und des ersten Codesymbols des Umlaufcodes TC relativ zu dem Bezugssystem der Aufnahmeeinrichtung 110 sowie die Anzahl und den Informationsgehalt der bereits aufgebrachten Codesymbole des Umlaufcodes. Der Karussellmikrocontroller 177 bestimmt auf im folgenden noch ausführlicher beschriebene Weise die Position der Stelle, wo das neue Codesymbol aufzubringen ist, wobei er Informationen aus dem Bildprozessor benutzt, und positioniert die Flaschen so, daß das neue Codesymbol des Umlaufcodes an der richtigen Stelle mittels des Lasers 172 aufgebracht werden kann. Zu diesem Zweck steuert der Karussellmikrocontroller 177 den Schrittmotor 158 des in der Erfassungsstation 130 befindlichen Kopfes 126 an, damit der Schrittmotor 158 die Flasche entsprechend dreht, bis diese die Kennzeichnungsstation 140 erreicht hat.

Jede Flasche soll bei jedem Wiederbefüllen mit einem neuen Codesymbol des Umlaufcodes versehen werden, sofern das aus im folgenden noch näher dargelegten Gründen zulässig und die Flasche nicht auszuscheiden ist. Eine Ausscheideeinrichtung 180 ist in Fig. 2 lediglich symbolisch angedeutet. Es kann sich um eine Düse handeln, die gegen die auszuscheidene Flasche bläßt.

Die bis hierher beschriebene Vorrichtung zum Kennzeichnen von wiederbefüllbaren transparenten Flaschen arbeitet, nochmals kurz zusammengefaßt, folgendermaßen:

Nachdem die Flasche 112 am Einlaß der Vorrichtung den Schneckförderer 118 und das Karussell 114 passiert hat, wird sie in den Aufnahmeeinrichtungen 110 des zentralen Karussells 108 vertikal eingespannt, indem der Kopf 126 abgesenkt wird. Nach dem Einspannen ist etwas Zeit verfügbar, um Schwingungen abklingen zu lassen. Dann passiert die Flasche 112 die Erfassungsstation 130, in der die Kamera 164 (über der Flasche) und die Beleuchtungsquelle 166 (unter der Flasche) vorgesehen sind. Die Kamera 164 macht ein Bild des unteren Bereiches 112a der Flasche 112, wo sich die Codes MC und TC befinden. Der Bildprozessor bestimmt die Position des Ursprungs der Codes und die Anzahl von bereits vorhandenen Codesymbolen des Umlaufcodes TC (z.B. in etwa 120 ms). Diese Information wird zu dem Hauptcontroller 175 und von hier zu dem Karussellmikrocontroller 177 übertragen. Der Karussellmikrocontroller 177 steuert die Schrittmotoren 158 an, um die Flasche 112 in die Position zu bringen, in der sie mit einem neuen Codesymbol gekennzeichnet werden kann (was z.B. weniger als 240 ms erfordert). Es lassen sich verschiedene Strategien für den Verlauf der Drehzahl über der Zeit in Abhängigkeit von der Anzahl der durch den Schrittmotor 158 auszuführenden Drehschritte verfolgen, um Schwingungen zu vermeiden, keine Drehschritte zu verlieren und die Bewegung in der zwischen der Erfassungsstation 130 und der Kennzeichnungsstation 140 verfügbaren Zeit auszuführen. Die Bewegung wird dabei durch einen nicht dargestellten induktiven Näherungssensor überwacht. Wenn die Flasche 112 für das Aufbringen des neuen Codesymbols richtig positioniert worden ist, befindet sich die stelle, an der das neue Codesymbol aufzubringen ist, genau auf der Mittellinie CL des Lasers 172, der dann diese Stelle beaufschlagt. Nach dem Aufbringen des neuen Codesymbols wird die Flasche gelöst, indem der Kopf 126 angehoben wird. Das Karussell 116 und der Schneckenförderer 120 am Auslaß der Vorrichtung 101 befördern die Flasche 112 aus der Vorrichtung 101 hinaus.

Weitere Möglichkeiten, die durch den Hauptcontroller 175 und den Karussellmikrocontroller 177 geboten werden wie Statistiken, Selbsttests, Programmierung der verschiedenenen Betriebsarten usw., sind für das Verständnis der Erfindung nicht erforderlich und brauchen daher hier nicht naher beschrieben zu werden. Wichtig sind dagegen für das Verständnis der Erfindung der Zweck des Umlaufcodes, dessen Aufbau (mechanisches Erscheinungsbild) und die Prinzipien und Verfahren zum Aufbringen und Lesen des Umlaufcodes, der auf transparenten, wiederbefüllbaren Flaschen eingraviert wird, weshalb das im folgenden nun näher beschrieben wird.

Eingangs ist bereits dargelegt worden, daß der Hauptzweck des Umlaufcodes TC darin besteht, die Geschichte oder Vergangenheit der Flasche hinsichtlich Füllgut und/oder Abfüller und/oder Abfülldatum und/oder Zahl der Befüllungen und/oder anderer Information über das Befüllen verfolgen zu können. Der Umlaufcode ist ein geordneter, sequentieller Code und enthält dreißig oder mehr Informationsteile, von denen jedes einen Bereich von 2048 oder mehr möglichen Kombinationen hat, die auf hier beschriebene Weise in die Oberfläche einer transparenten Flasche eingraviert und später wieder gelesen werden.

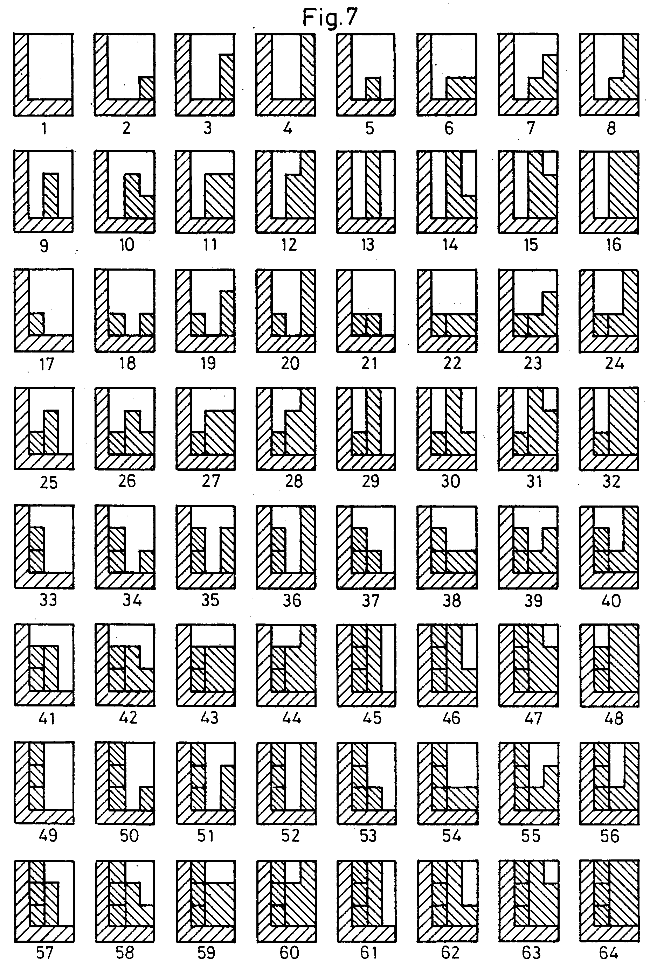

Gemäß der Darstellung in Fig. 7 weist der Umlaufcode TC folgende Merkmale auf:
1. Eine variable 3x3-Matrix mit binärer Rohinformation aus 2⁹ = 512 verschiedenen Kombinationen.
2. Einen festen 3x1-Zeilenvektor, der an der Oberseite oder Unterseite (oder beiden Seiten) der Matrix angeordnet ist, zur Klassendiskrimination und für den Registrationsprozeß während des Lesens und der Interpretation.
3. Einen festen 3x1-Spaltenvektor, der an der linken oder rechten Seite (oder beiden Seiten) der Matrix angeordnet ist, zur Klassendiskrimination und für den Registrationsprozeß während des Lesens und der Interpretation.
4. Einen Fehlererfassungs- und/oder -korrekturmechanismus für jede Zeile und/oder Spalte (z.B. ein CRC-Code, ein Hamming-Code, gerade/ungerade Parität, usw.). Jede der obigen Komponenten des Codes kann bei einem codesymbol vorhanden sein oder nicht, wie es in Fig. 7 gezeigt ist.

Jedes Codesymbol des Umlaufcodes TC kann auf wiederbefüllbare Behälter und insbesondere auf wiederbefüllbare PET-Flaschen an unterschiedlichen Stellen aufgebracht werden. Bevorzugt werden Bereiche, die mechanischer Beschädigung aufgrund der Handhabung und des Gebrauches weniger ausgesetzt sind, wie z.B. der gekrümmte Bereich 112a (Fig. 5).

Jedes Element des Codesymbols (d.h. ein Matrixelement, ein Vektor oder ein Prüfelement) hat eine Größe in einem Bereich von 0,5 bis 2,5 mm, je nach Informationsgehalt/Konfiguration des Codesymbols, Anbringungsstelle desselben und/oder Leseverfahren und/oder anderen zu berücksichtigenden Gegebenheiten, was eine Gesamtgröße jedes Codesymbols ergibt, die von 2 bis 13 mm x 2 bis 13 mm reicht, was von denselben Einflußfaktoren wie bei jedem Element abhängig ist.

Der Umlaufcode TC wird als geordnet und sequentiell bezeichnet, da die Aufbringung und die Interpretation des Codes eine Funktion der absoluten und/oder relativen Position bezüglich eines Referenzpunktes und eine Funktion der Relativposition der Codeelemente (Wörter) sind.

Der Umlaufcode TC wird in dem hier beschriebenen Beispiel mittels des Lasers 172 in die äußere Oberfläche der Flasche 112 eingraviert. Das Lesen des Umlaufcodes TC und die Interpretation des Informationsgehalts erfolgen mittels der oben beschriebenen Bildverarbeitungshardware und -software unter Verwendung der Kamera 164.

Das Codesymbol 1 in Fig. 7 enthält lediglich den Spalten- und Zeilenvektor als Registriermarkierung (für die Registerhaltigkeit beim Lesen und der Interpretation des Umlaufcodes). Die nutzbare Fläche des Codesymbols ist die rechteckförmige 3x3-Matrix, die ein Alphabet aus 4 Zeichen und Wörter aus jeweils 3 Zeichen ermöglicht, was insgesamt 4³ = 64 mögliche Codesymbole ergibt.

Die 64 Codesymbole lassen sich beispielshalber 16 Füllanlagen zuordnen, von denen jede in dar Lage ist, 4 verschiedene Produkte in die Flaschen zu füllen. Die Zuordnung kann folgendermaßen erfolgen:
Codesymbol 1: Anlage 1, Produkt 1
Codesymbol 2: Anlage 1, Produkt 2
Codesymbol 4: Anlage 1, Produkt 4
Codesymbol 6: Anlage 2, Produkt 2
Codesymbol 11: Anlage 3, Produkt 3
Codesymbol 16: Anlage 4, Produkt 4
Codesymbol 63: Anlage 16, Produkt 3
Codesymbol 64: Anlage 16, Produkt 4.

Eine andere Zuordnungsmöglichkeit bestünde darin, 64 verschiedene Produkte 16 Anlagen zuzuordnen, z.B. Produkte 1 bis 4 aus Anlage 1, 5 bis 8 aus Anlage 2, 9 bis 12 aus Anlage 3, ... und 60 bis 64 aus Anlage 16.

Der Umlaufcode TC wird in dem hier beschriebenen Beispiel auf die Flaschen 112 aufgebracht, indem der auf den Flaschen bereits von Haus vorhandene Herstellercode MG für die Wahl der Bezugsmarkierung herangezogen wird. Der Herstellercode MC wird in die Flasche bei deren Herstellung eingraviert (oder anderweitig aufgebracht) und enthält Information über die Herstellung der Flasche (Arbeitsschicht beim Flaschenhersteller, Flaschentyp, Flaschenprodutkionslinie, Datum, Kontrollbits, Start- und Stopbit). Ein entsprechender Herstellercode der Anmelderin, der bei PET-Flaschen benutzt wird, besteht aus 32 Bits, worauf hier nicht näher eingegangen zu werden braucht.

Der Umlaufcode TC besteht aus einer Folge von Code-Symbolen, von denen bei der ersten Befüllung und bei jeder Wiederbefüllung der Flasche 112 eines auf die Flasche aufgebracht wird, also mindestens aus einem Code-Symbol und maximal aus 25 bis 30 Code-Symbolen. Jedes Code-Symbol enthält Information über das Füllgut und den Abfüller.

Der Herstellercode MC und der Umlaufcode TC werden im unteren Bereich 112a der Flasche in eng benachbarten Kreisringen angeordnet (Fig. 5). Als Ursprung der Codes wird der Radius angesehen, auf welchem sich die Mitte des ersten Bits des Herstellercodes MC befindet. Der Kreisring, d.h. der kreisringförmige Oberflächenbereich, in welchem der Umlaufcode TC aufgetragen wird, wird in 25 Zellen unterteilt (bei Flaschen, bei denen 25 Umläufe oder Befüllungen maximal zulässig sind), so dass jede Zelle 360°/25 = 14,4° einnimmt, und zwar ab dem genannten Ursprung, was symbolisch in Fig. 8 dargestellt ist. Jedes neue Code-Symbol wird in die erste freie Zelle eingeschrieben. Vorzugsweise wird das erste Code-Symbol TC unterhalb der Codemarke MC 1 gesetzt, wie in Fig. 8 gezeigt. Das erste Code-Symbol kann aber auch zufällig gesetzt werden.

Damit keine additiven Positionierungsfehler auftreten, wird die Position, wo das neue Code-Symbol des Umlaufcodes aufgebracht wird, jeweils mit Bezug auf den Ursprung (also hier mit Bezug auf das erste Code-Symbol in Fig. 8) und nicht mit Bezug auf das vorhergehende Code-Symbol festgelegt. Weil die Positioniergenauigkeit begrenzt ist, nehmen die Code-Symbole des Umlaufcodes TC jeweils nicht die gesamte Zelle ein, um Ueberlappungen zu vermeiden.

Es ist zweckmässig, aber nicht unbedingt erforderlich, als Positionsmarkierung für die Code-Symbole des Umlaufcodes TC die erste Codemarke MC1 des Herstellercodes zu verwenden. Es könnte beispielsweise aber auch die zweite, drittte oder jede andere Codemarke des Herstellercodes für diesen Zweck benutzt werden.

Die gegenseitige Relativposition von Herstellercode und Umlaufcode ist nach Wahl der Positionsmarkierung festgelegt und bekannt. Wenn die Flasche 112 in das zentrale Karussell 108 gelangt, hat sie eine beliebige Position in bezug auf einen externen Referenzpunkt. Als erstes bestimmt daher der Bildprozessor 176 die Lage des Herstellercodes und des gegebenenfalls bereits vorhandenen Umlaufcodes. Danach kann die Bildverarbeitungssoftware auf einfache Weise den Winkel bestimmen, um den die Flasche auf ihrem Weg bis zur Kennzeichnungsstation 140 um ihre Symmetrieachse gedreht werden muss, damit sich die richtige Stelle für das neue Code-Symbol dann in der Mittellinie CL des Lasers 172 befindet. Der Bildprozessor ermittelt dabei die Lage des Umlaufcodes TC und die Anzahl der bereits durch Code-Symbole des Umlaufcodes besetzten Zellen, um die erste freie Zelle zu finden, in die das neue Code-Symbol einzuschreiben ist. Falls noch kein Code-Symbol vorhanden ist, wird die Lage des ersten Code-Symbols zufällig, vorzugsweise aber abhängig vom Herstellercode MC, gewählt.

Eingangs ist bereits ausführlich beschrieben worden, dass ein neues Code-Symbol nur dann aufgebracht wird, wenn durch das Wiederbefüllen eine bestimmte Füllgutsequenz eingehalten wird. Die dafür erforderliche Information gewinnt der Bildprozessor 167 durch Auswerten des Informationsgehaltes des jeweils letzten Code-Symbols des Umlaufcodes TC. Diese Information ist auf oben beschriebene Weise in den einzelnen Code-Symbolen 1 bis 64 enthalten, in denen jedes Code-Element aus einem, zwei oder drei Matrixelementen besteht, die vertikal lückenlos aneinander anschliessen. Von diesen Code-Elementen können null (vgl. Code-Symbol 1) bis drei pro Code-Symbol vorhanden sein (vgl. Code-Symbol 64) und jeweils aus 1 bis 3 Matrixelementen bestehen, was sich ohne weiteres aus Fig. 7 und dem oben angegenenen Zuordnungsbeispiel ergibt.

In dem vorstehend unter Bezugnahme auf die Zeichnungen beschriebenen Ausführungsbeispiel ist in der Erfassungsstation 130 die Kamera 164 sowohl zum Erfassen des Herstellercodes MC als auch zum Lesen des Umlaufcodes TC vorgesehen. Wenn in einer Füllanlage bereits eine Inspektionsmaschine mit einer Kamera vorhanden ist, die nach dem Prinzip der hier beschriebenen Kamera 164 arbeitet (also z.B. als Videokamera mit CCD- oder dergleichen Bildwandlereinrichtung), ist im Speicher der Inspektionsmaschine mit dem Bild des unteren Bereiches der Flasche auch bereits der von Haus aus auf der Flasche vorhandene Herstellercode gespeichert. Diese gespeicherte Information kann in dem Bildprozessor 176 verwendet werden, um die absolute Lage des Herstellercodes für das Kennzeichnen mit dem Umlaufcode zu finden, sofern dies für das erste Code-Symbol bevorzugt wird. In diesem Fall braucht dann in der Erfassungsstation 130 statt einer Kamera lediglich ein Photodetektor vorgesehen zu sein. Der Photodetektor liest das Bitmuster des Herstellercodes, das mit dem aus dem Speicher der Inspektionsmaschine zugeführten und damit bekannten Herstellercode-Bitmuster verglichen wird. Die wahre Position des Herstellercodes ist gefunden, wenn die Anzahl an Nichtübereinstimmungen zwischen dem gespeicherten und dem gelesenen Bitmuster am kleinsten ist. Ab einer als Positionsmarkierung gewählten Codemarke des Herstellercodes liest der Photodetektor ausserdem die Code-Symbole des Umlaufcodes. Das Lesen des Inforamtionsgehalts der Code-Symbole erfolgt in entsprechender Mustererkennungs-Technik in dem Bildprozessor.

## Patentansprüche

1. Verfahren zum Kennzeichnen von wiederbefüllbaren Behältern, insbesondere Kunststoff-Flaschen, mit Code-Symbolen, anhand welcher sich später feststellen lässt, ob ein Behälter erneut befüllt werden darf oder auszuscheiden ist, dadurch gekennzeichnet, dass durch eine Logikschaltung (174) in einem kombinierten Erfassungs- und Leseschritt die Position eines auf dem Behälter von Haus aus vorhandenen und aus mehreren Codemarken bestehenden Herstellercodes und die Position von auf dem Behälter bereits vorhandenen Code-Symbolen erfasst werden, dass anschliessend durch die Logikschaltung (174) die Position eines neuen Code-Symbols relativ zu der Position der bereits vorhandenen Code-Symbole ermittelt und der Behälter in eine Kennzeichnungsposition bewegt wird, in der das neue Code-Symbol in vorbestimmtem Abstand vom zuletzt aufgebrachten Code-Symbol aufbringbar ist, so dass die Code-Symbole einen geordneten, sequentiellen Code bilden, und dass in einem Kennzeichnungsschritt der in die Kennzeichnungsposition bewegte Behälter mit dem neuen Code-Symbol gekennzeichnet wird.

2. Verfahren nach Anspruch 1, dadurch gekennzeichnet, dass, falls im kombinierten Erfassungs- und Leseschritt kein Code-Symbol erfassbar ist, die Position des ersten aufzubringenden Code-Symbols relativ zu der Position einer der Codemarken des Herstellercodes ermittelt wird.

3. Verfahren nach Anspruch 2, dadurch gekennzeichnet, dass als Positionsmarkierung die erste Codemarke des Herstellercodes gewählt wird.

4. Verfahren nach Anspruch 1, dadurch gekennzeichnet, dass für die Position des neuen Code-Symbols ein Winkelabstand von dem zuletzt aufgebrachten Code-Symbol ermittelt wird, und dass der Behälter bei dem Bewegen in die Kennzeichnungsposition entsprechend dem Winkelabstand um eine Symmetrieachse gedreht wird.

5. Verfahren nach Anspruch 3, dadurch gekennzeichnet, dass als Position für das erste Code-Symbol ein Behälterradius gewählt wird, auf dem sich die Mitte der ersten Codemarke des Herstellercodes befindet.

6. Verfahren nach Anspruch 1 oder 4, dadurch gekennzeichnet, dass der geordnete, sequentielle Code gebildet wird, indem bei in gleiche Zellen aufgeteiltem Umfang des Behälters der Behälter in aufeinanderfolgenden Zellen jeweils mit einem Code-Symbol so gekennzeichnet wird, dass die Code-Symbole sich gegenseitig nicht überlappen.

7. Verfahren nach Anspruch 6, dadurch gekennzeichnet, dass der Umfang des Behälters in 25 Zellen mit einer Winkelbreite von jeweils 360°/25 = 14,4° aufgeteilt wird.

8. Verfahren nach einem der Ansprüche 1 bis 7, dadurch gekennzeichnet, dass in dem Erfassungs- und Leseschritt ein in dem auf dem Behälter als letztes vorhandenen Code-Symbols vorhandener Informationsgehalt ausgewertet und dazu benutzt wird, den Behälter, statt mit einem neuen Code-Symbol zu kennzeichnen und wiederzubefüllen, auszuscheiden, wenn eine bestimmte Füllgutsequenz durch das Wiederbefüllen nicht eingehalten würde.

9. Verfahren nach einem der Ansprüche 1 bis 8, dadurch gekennzeichnet, dass jedes Code-Symbol als dauerhafte Markierung in der äusseren Oberfläche des Behälters im unteren Bereich desselben und nahe bei dem Herstellercode mittels eines Laserstrahls hergestellt wird, der durch eine Maske oder moduliert durch ein Strahlablenksystem auf die äussere Oberfläche geschickt wird.

10. Verfahren nach einem der Ansprüche 1 bis 9, dadurch gekennzeichnet, dass der kombinierte Erfassungs- und Leseschritt bei transparenten Behältern das Erfassen der Code-Symbole mittels Beleuchtung von aussen und Kamera von innen, und das Lesen der erfassten Information mit Hilfe von Bildverarbeitungshard- und -software umfasst.

11. Verfahren nach Anspruch 9, dadurch gekennzeichnet, dass als Code-Symbol eine variable Matrix mit einem Umfang und einem darin vorhandenen Informationsgehalt verwendet wird, wobei der Umfang wenigstens zwei durchgehende Seiten fester Länge hat, und dass die Matrix eine rechteckförmige 3 x 3-Matrix mit binärer Rohinformation aus 2⁹ = 512 unterschiedlichen Kombinationen ist, dass die eine durchgehende Seite ein fester 3 x 1-Zeilenvektor ist, der an der oberen und/oder unteren Seite der Matrix vorgesehen ist, dass die andere durchgehende Seite ein fester 3 x 1-Spaltenvektor ist, der an der linken und/oder rechten Seite der Matrix vorgesehen ist, und dass die drei Spalten der Matrix jeweils aus null, ein, zwei oder drei von dem Zeilenvektor aus aufgetragenen und in der Auftragungsrichtung lückenlos aneinander anschliessenden 1 x 1-Matrixelementen gebildet sind.

12. Vorrichtung zur Durchführung des Verfahrens nach Anspruch 1, zum Kennzeichnen von wiederbefüllbaren Behältern, insbesondere Kunststoff-Flaschen, mit Code-Symbolen, anhand welcher sich später feststellen lässt, ob ein Behälter erneut befüllt werden darf oder auszuscheiden ist, dadurch gekennzeichnet, dass eine Fördereinrichtung (106) vorgesehen ist zum Bewegen des Behälters (112) in eine Erfassungsstation (130), dass eine kombinierte Erfassungs- und Leseeinrichtung eine Kamera (164) zum Aufnehmen von Positionsmarkierung (MC1) und Code-Symbolen aufweist, dass eine Verarbeitungseinrichtung mit einem mit der Kamera (164) verbundenen Bildprozessor (176) vorgesehen ist, dass der Bildprozessor (176) an eine Steuereinrichtung (177) angeschlossen ist, die mit einer Dreheinrichtung (126, 158) für den Behälter verbunden ist, und dass in einer auf die Erfassungsstation (130) folgenden Kennzeichnungsstation (140) eine Kennzeichnungseinrichtung (172) zum Kennzeichnen der Behälter (112) mit Code-Symbolen angeordnet ist.

13. Vorrichtung nach Anspruch 12, dadurch gekennzeichnet, dass die Fördereinrichtung eine Karusselleinrichtung (106) mit mehreren Aufnahmeeinrichtungen (110) für Behälter (112) aufweist, wobei jeder Aufnahmeeinrichtung (110) eine Dreheinrichtung (126, 158) zum Drehen des Behälters (112) um dessen Symmetrieachse zugeornet ist, und jede Aufnahmeeinrichtung (110) nacheinander durch die Erfassungsstation (130) und die Kennzeichnungsstation (140) hindurch bewegbar ist.

14. Vorrichtung nach Anspruch 13, dadurch gekennzeichnet, dass jede Dreheinrichtung (126, 158) einen in der Symmetrieachse beweglichen Kopf (126) aufweist, der mittels eines Kurvenkörpers (136) auf den Behälter (112) absenkbar ist, und einen durch die Steuereinrichtung (177) betätigbaren und ausserhalb der Symmetrieachse des Behälters (112) montierten Schrittmotor (158) zum Drehen des Behälters (112) um die Symmetrieachse trägt, und dass die Karusselleinrichtung (106) ein oberes Hauptkarussell (108a) aufweist, an dem die Köpfe (126) montiert sind.

15. Vorrichtung nach einem der Ansprüche 12 bis 14, dadurch gekennzeichnet, dass als Kennzeichungseinrichtung ein Laser vorgesehen ist, und dass der Laser (172) so angeordnet ist, dass durch ihn die Code-Symbole in einem Kreisring unterhalb des Herstellercodes (MC) auf den Behälter (112) aufbringbar sind.

## Claims

1. Process for marking refillable containers, more especially plastic bottles, with code symbols, by means of which it can later be determined whether a container has to be filled again or must be excluded, characterized in that the position of a manufacturer's code which exists on the container from the outset and is composed of several code marks, and the position of code symbols already existing on the container are detected through a logic circuit (174) in a combined detection and reading stage, and that through the logic circuit (174) the position of a new code symbol relative to the position of the code symbols already in existence is then determined, and the container is moved into a marking position in which the new code symbol can be introduced at a predetermined distance from the code symbol last introduced, so that the code symbols form an ordered sequential code, and that the container which is moved into the marking position is marked with the new code symbol in one marking stage.

2. Process as claimed in Claim 1, characterized in that if no code symbol can be detected in the combined detection and reading stage, the position of the first code symbol to be introduced relative to the position of one of the code marks of the manufacturer's code is determined.

3. Process as claimed in Claim 2, characterized in that the first code mark of the manufacturer's code is selected as a position marking.

4. Process as claimed in Claim 1, characterized in that an angle spacing from the code symbol last introduced is determined for the position of the new code symbol, and that the container when moving into the marking position is rotated about an axis of symmetry according to the angle spacing.

5. Process as claimed in Claim 3, characterized in that a container radius on which there is the centre of the first code mark of the manufacturer's code is selected as the position for the first code symbol.

6. Process as claimed in Claim 1 or Claim 4, characterized in that the ordered sequential code is formed, whilst with the division of the circumference into equal cells, the container is marked in each case in successive cells, in such a way that the code symbols do not overlap each other.

7. Process as claimed in Claim 6, characterized in that the circumference of the container is divided into 25 cells with an angle width of 360°/25 = 14.4° in each case.

8. Process as claimed in one of the Claims 1 to 7, characterized in that a data content which exists on the container as a last available code symbol is evaluated in the detection and reading stage and is used in order to exclude the container instead of marking it with a new code symbol and re-filling it, if a certain filling sequence should not be maintained through re-filling.

9. Process as claimed in one of the Claims 1 to 8, characterized in that each code symbol is produced in the outer surface of the container in the lower region of the same and close to the manufacturer's code by means of a laser beam which is sent to the outer surface through a mask or modulated by a beam-deflecting system.

10. Process as claimed in one of the Claims 1 to 9, characterized in that the combined detection and reading stage in the case of transparent containers comprises the detection of the code symbols by means of lighting from outside and camera from the inside, and the reading of the detected data with the aid of image-processing hardware and software.

11. Process as claimed in Claim 9, characterized in that a variable matrix with a circumference and a data content which is available therein is used as a code symbol, wherein the circumference has at least two continuous sides of fixed length, and that the matrix is a rectangular-shaped 3 x 3 matrix with binary rough data of 2⁹ = 512 different combinations, that the one continuous side is a fixed 3 x 1 line vector, which is provided on the top and/or bottom side of the matrix, that the other continuous side is a fixed 3 x 1 column vector which is provided on the left and/or right side of the matrix, and that the three columns of the matrix are formed respectively from zero, one, two or three 1 x 1 matrix elements which are applied from the line vector and adjoin each other without gaps in the direction of application.

12. Device for carrying out the process as claimed in Claim 1, for marking re-fillable containers, more especially plastic bottles, with code symbols, with the aid of which it can later be determined whether a container must be filled again or excluded, characterized in that a conveyor device (106) is provided for moving the container (112) into a detection station (130), that a combined detection and reading device has a camera (164) for photographing position marking (MC1) and code symbols, that a processing device with an image processor (176) which is connected to the camera (164) is provided, that the image processor (176) is linked to a control device (177), which is connected to a device (126 and 158) for rotating the container, and that a marking device (172) for marking the containers (112) with code symbols is arranged in a marking station (140) which follows on the detection station (130).

13. Device as claimed in Claim 12, characterized in that the conveyor device has a roundabout arrangement (1o6) with several devices (110) for accepting containers (112), wherein a rotating device (126 and 158) for rotating the container (112) about its axis of symmetry is coordinated with each receptacle device (110), and each receptacle device (110) can be moved in succession through the detection station (130) and the marking station (140).

14. Device as claimed in Claim 13, characterized in that each rotating device (126 and 158) has a head (126) which is movable in the axis of symmetry, and which by means of a curve(d) body (136) can be lowered onto the container (112), and carries a stepping motor (158) for rotating the container (112) about the axis of symmetry, which can be actuated by the control device (177) and is mounted outside the axis of symmetry of the container (112), and that the roundabout device (106) has an upper main roundabout (108a) on which the heads (126) are mounted.

15. Device as claimed in one of the Claims 12 to 14, characterized in that a laser is provided as a marking device, and that the laser (172) is so arranged that through it the code symbols can be introduced onto the container (112) in a circular ring underneath the manufacturer's code (MC).

## Revendications

1. Procédé pour caractériser des récipients rechargeables, notamment des bouteilles en matière plastique, avec des symboles de code, sur la base desquels on peut déterminer ultérieurement si un récipient peut être rechargé ou doit être éliminé, caractérisé en ce que la position d'un code du fabriquant, oui est présent sur le récipient à l'origine et est constitué par plusieurs marques de code, et la position de symboles de code, déjà présents sur le récipient, sont détectées par un circuit logique (174) lors d'une étape combinée de détection et de lecture, qu'ensuite la position d'un nouveau symbole de code par rapport à la position des symboles de code déjà existants est déterminée par le circuit logique (174) et que le récipient est amené dans une position de caractérisation, dans laquelle le nouveau symbole de code peut être amené à une distance prédéterminée du symbole de code apposé en dernier lieu, de sorte que les symboles de code forment un code séquentiel ordonné, et que, lors d'une étape de caractérisation, le récipient amené dans la position de caractérisation est caractérisé par le nouveau symbole de code.

2. Procédé selon la revendication 1, caractérisé en ce que dans le cas où aucun symbole de code ne peut être détecté lors de l'étape combinée de détection et de lecture, la position du premier symbole de code devant être appliqué par rapport à la position de l'une des marques du code du fabricant est déterminée.

3. Procédé selon la revendication 2, caractérisé en ce que la première marque du code du fabricant est choisie en tant que marque de position.

4. Procédé selon la revendication 1, caractérisé en ce que pour la position du nouveau symbole de code, un écart angulaire par rapport au symbole de code appliqué en dernier lieu est déterminé, et que lors du déplacement aboutissant la position de caractérisation, le récipient est tourné d'une manière correspondant à la distance angulaire, autour d'un axe de symétrie.

5. Procédé selon la revendication 3, caractérisé en ce qu'on choisit comme position pour le premier symbole de code, un rayon du récipient, sur lequel est disposé le centre de la première marque du code du fabricant.

6. Procédé selon la revendication 1 ou 4, caractérisé en ce qu'on forme le code séquentiel ordonné en caractérisant le récipient, dans le cas où sa périphérie est divisée en des cellules identiques, dans des cellules successives en utilisant respectivement un symbole de code, de telle sorte que les symboles de code ne se chevauchent pas.

7. Procédé selon la revendication 6, caractérisé en ce que la périphérie du récipient est subdivisée en 25 cellules ayant une largeur angulaire égale respectivement à 360°/25 = 14,4°.

8. Procédé selon l'une des revendications 1 à 7, caractérisé en ce que lors de l'étape de détection et de lecture, un contenu en informations, présent dans le récipient sous la forme d'un dernier symbole de code présent, est évalué et utilisé pour caractériser le récipient, à la place d'un nouveau symbole de code, et le recharger, ou l'éliminer si une séquence déterminée de maintien de remplissage n'était pas respectée lors du rechargement.

9. Procédé selon l'une des revendications 1 à 8, caractérisé en ce que chaque symbole de code est fabriqué sous la forme d'une marque durable dans la surface extérieure du récipient, dans la partie inférieure de ce dernier et à proximité du code du fabricant, au moyen d'un faisceau laser qui est dirigé à travers un masque ou bien modulé par un système de déviation de faisceau, sur la surface extérieure.

10. Procédé selon l'une des revendications 1 à 9, caractérisé en ce que dans le cas de récipients transparents, l'étape combinée de détection et de lecture comprend la détection des symboles de code au moyen d'un éclairage de l'extérieur et au moyen d'un appareil de prise de vues à partir de l'intérieur, et la lecture des informations détectées, à l'aide d'un matériel et d'un logiciel de traitement d'images.

11. Procédé selon la revendication 9, caractérisé en ce qu'on utilise comme symbole de code une matrice variable comportant une périphérie et un contenu en informations présent dans cette matrice, la périphérie possédant au moins deux côtés continus de longueur fixe, et que la matrice est une matrice rectangulaire 3x3 comportant une information brute binaire constituée de 29 = 512 combinaisons différentes, ou un côté continu est un vecteur de ligne 3x1 fixe, qui est prévu sur le côté supérieur et/ou sur le côté inférieur de la matrice, que l'autre côté continu est un vecteur de colonne 3x1 fixe, qui est prévu sur le côté gauche et/ou sur le côté droit de la matrice, et que les trois colonnes de la matrice sont formées respectivement par zéro, un, deux ou trois éléments matriciels 1x1 qui sont tirés du vecteur de ligne et se raccordent les uns aux autres sans intervalle vide dans la direction d'application.

12. Dispositif pour la mise en oeuvre du procédé selon la revendication 1 pour caractériser des récipients rechargeables, notamment des bouteilles en matière plastique, avec des symboles de code, sur la base desquels on peut déterminer ultérieurement si un récipient peut être rechargé ou doit être éliminé, caractérisé en ce qu'il est prévu un dispositif d'entraînement (106) servant à déplacer le récipient (112) pour l'amener dans un poste de détection (130), qu'un dispositif combiné de détection et de lecture comporte un appareil de prise de vues (164) pour enregistrer des marques de position (MC1) des symboles de code, qu'il est prévu un dispositif de traitement comportant un processeur d'images (176) relié à l'appareil de prise de vues (164), que le processeur d'images (176) est raccordé à un dispositif de commande (177), qui est relié à un dispositif d'entraînement en rotation (126,158) pour le récipient, et qu'un dispositif de caractérisation (172) servant à caractériser le récipient (112) comportant des symboles de code est disposé dans un poste de caractérisation (140), qui suit le poste de détection (130).

13. Dispositif selon la revendication 12, caractérisé en ce que le dispositif d'entraînement comporte un dispositif à carrousel (106) comportant plusieurs dispositifs de réception (110) pour des récipients (112), un dispositif d'entraînement en rotation (126,158) servant à entraîner en rotation le récipient (112) autour de son axe de symétrie étant associé à chaque dispositif de réception (110), tandis que chaque dispositif de réception (110) est déplacable de manière à traverser successivement le poste de détection (130) et le poste de caractérisation (140).

14. Dispositif selon la revendication 13, caractérisé en ce que chaque dispositif d'entraînement en rotation (126,158) possède une tête (126) déplacable le long de l'axe de symétrie et qui peut être abaissée, au moyen d'un corps formant came (136), sur le récipient (112), et un moteur pas-à-pas (158) pouvant être actionné par le dispositif de commande (177) et monté à l'extérieur en dehors de l'axe de symétrie du récipient (112) et servant à entraîner en rotation le récipient (112) autour de l'axe de symétrie, et que le dispositif à carrousel (106) comporte un carrousel principal supérieur (108a), sur lequel sont montées les têtes (126).

15. Dispositif selonl'une des revendications 12 à 14, caractérisé en ce qu'un laser est prévu comme dispositif de caractérisation, et que le laser (172) est disposé de telle sorte que les symboles de code peuvent être appliqués au moyen du laser sur le récipient (112) sur un anneau circulaire au-dessous du code (MC) du fabricant.
